# EUROPEAN PATENT APPLICATION

(11) **EP 2 082 906 A1**
(43) Date of publication of application: **29.07.2009**
(21) Application number: 07831624.7
(22) Date of filing: 12.11.2007
(51) Int. Cl.: B60H 1/32, F04B 27/14, F04B 49/00, F25B 1/00

(54) **VEHICULAR REFRIGERATING CYCLE**

(30) Priority: 15.11.2006 JP 2006309086
(71) Applicant: Sanden Corporation, Isesaki-shi, Gunma 372-8502 (JP)
(72) Inventor: YAMAMOTO, Kiyokazu, Isesaki-shi Gunma 372-8502 (JP); OCHIAI, Yoshihiro, Isesaki-shi Gunma 372-8502 (JP)
(74) Representative: Prüfer & Partner GbR European Patent Attorneys
(86) International application number: PCT/JP2007/071894
(87) International publication number: WO 2008/059783

(57) **Abstract**

Provided is a vehicular refrigerating cycle comprising a compressor, which uses carbon dioxide refrigerant and which has a displacement control valve capable of controlling a displacement in response to an external signal. The vehicular refrigerating cycle comprises a falling-off preventing means for stopping a movement of the displacement control valve in a direction in which the displacement control valve comes out of its mounting position on the compressor, disposed at a portion which is positioned in the direction for the displacement control valve to come out of its mounting position on the compressor and positioned on this side of a position for the displacement control valve to completely fall off from the compressor. The displacement control valve can be prevented from exerting unpreferred influences upon the environment, even if the displacement control valve being mounted on the compressor should become so unfixed for some reason as could pop out of the compressor.

## Description

### Technical Field of the Invention

The present invention relates to a refrigerating cycle mounted on a vehicle, which has a compressor attached with an external signal control-system displacement control valve, and specifically, to a vehicular refrigerating cycle using carbon dioxide refrigerant.

### Background Art of the Invention

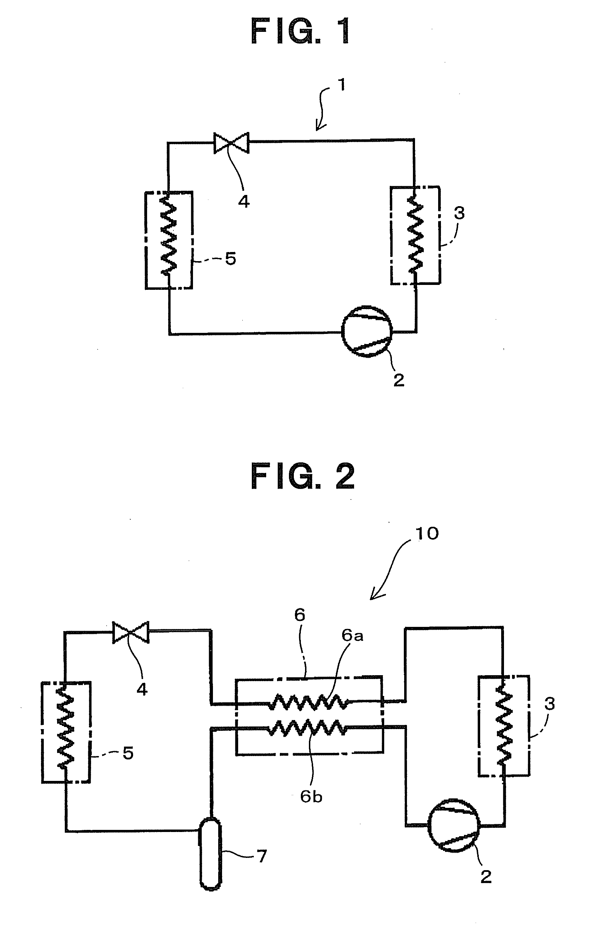

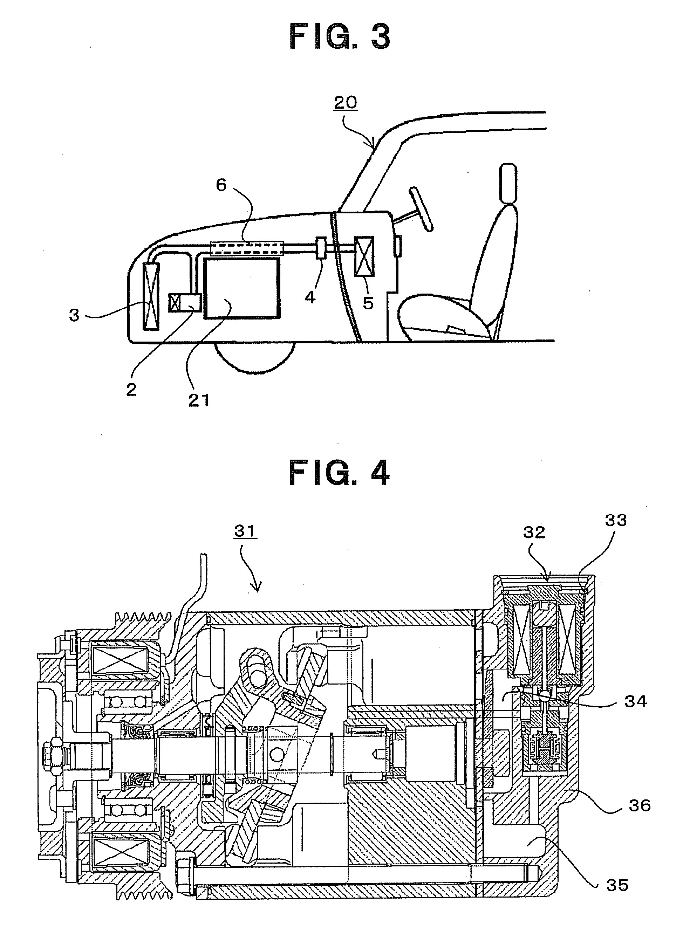

As shown in Fig. 1 for example, a refrigerating cycle mounted on a vehicle 1 using Freon-group refrigerant (for example, R134a) is generally constructed from a compressor 2, a radiator 3, an expansion mechanism 4 and an evaporator 5. On the other hand, a vehicular refrigerating cycle 10 using carbon dioxide refrigerant, as compared with the cycle depicted in Fig. 1, for example, as shown in Fig. 2, is formed as a structure added with an internal heat exchanger 6 and further an accumulator 7 (for example, Patent document 1). This structure is considered with respect to a fact that a used pressure range is high in the refrigerating cycle 10 using carbon dioxide refrigerant as compared with the conventional refrigerating cycle 1 using Freon gas and there is a case where the internal pressure elevates up to averagely 6 to 7 MPaG at a cycle stopping time and nearly 14 MPaG at an operating time. Such a refrigerating cycle 10 using carbon dioxide refrigerant is mounted on a vehicle, for example, as depicted in Fig. 3. Namely, for example, compressor 2 is attached to an engine 21 of a vehicle 20, and radiator 3, expansion mechanism 4, internal heat exchanger 6 and evaporator 5 are disposed as shown in Fig. 3 (in Fig. 3, accumulator 7 is omitted).

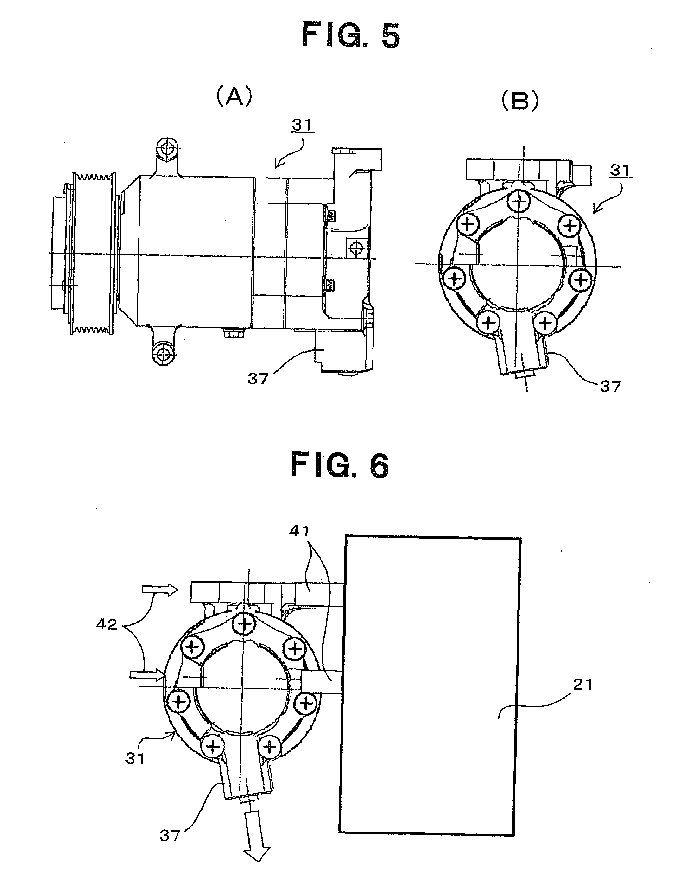

In this refrigerating cycle 10 using carbon dioxide refrigerant, compressor 2 is constructed at a high-pressure specification, but it is made of almost similar structural parts to those of the conventional compressor using Freon-group refrigerant. For example, as an inclined plate-type variable displacement compressor 31 is exemplified in Fig. 4, it is constructed almost similarly to the compressor using Freon-group refrigerant. In particular, although a displacement control valve 32 for controlling the displacement of compressor 31, especially, a displacement control valve 32 capable of controlling the displacement by an external signal, is generally used, the mounting method of this displacement control valve 32 on compressor 31 is frequently employed also as a similar mounting method in the conventional compressor using Freon-group refrigerant. In the example exemplified in the figure, a structure is employed wherein displacement control valve 32 is inserted into a predetermined mounting portion from outside and the inserted displacement control valve 32 is fixed by a snap ring 33 and the like. Further, although generally displacement control valve 32 is frequently attached to a cylinder head 36 forming a discharge chamber 34 and a suction chamber 35, the attachment place of displacement control valve 32 is not particularly decided in the conventional technology. For example, as depicted in Fig. 5 (A) and (B), a displacement control valve mounting portion 37 is disposed on compressor 31.

If such a compressor 31 as shown in Fig. 5 is attached to engine 21 at the disposition condition as shown in Fig. 3, the form becomes that as shown in Fig. 6 for example. In Fig. 6, compressor 31 is attached and fixed to compressor attachment portions 41 of engine 21 by bolt fastening and the like in a direction shown by arrows 42. In this attached condition, as shown in Fig. 6, displacement control valve mounting portion 37 is directed downward.

However, in the case where displacement control valve 32 is fixed by the conventional fixing method as shown in Fig. 4, if an unexpected trouble such as a corrosion of a fastening device (such as snap ring 32) or a mixing of a defective occurs, there is a possibility that the fixing of the displacement control valve 32 gets out. If such a condition would be generated, it would be expected that displacement control valve 32 might pop out toward outside by the internal pressure of the refrigerating cycle. In particular, in the refrigerating cycle using carbon dioxide refrigerant, as aforementioned, because the average operational pressure is high to be about ten times as compared with the case using Freon-group refrigerant, there is a possibility of occurrence of the above-described unexpected condition in the conventional design concept.

### Disclosure of the Invention

### Problems to be solved by the Invention

Accordingly, paying attention to the above-described problems, in a vehicular refrigerating cycle using carbon dioxide refrigerant, an object of the present invention is to prevent a displacement control valve from exerting unpreferred influences upon the environment, even if the displacement control valve being mounted on a compressor should become so unfixed for some reason as could pop out of the compressor.

### Means for solving the Problems

To achieve the above-described object, a vehicular refrigerating cycle according to the present invention has a compressor, which uses carbon dioxide refrigerant and which has a displacement control valve capable of controlling a displacement in response to an external signal, and the vehicular refrigerating cycle comprises a falling-off preventing means for stopping a movement of the displacement control valve in a direction in which the displacement control valve comes out of its mounting position on the compressor, the falling-off preventing means being disposed at a portion which is positioned in the direction for the displacement control valve to come out of its mounting position on the compressor and positioned on this side of a position for the displacement control valve to completely fall off from the compressor.

Namely, this is a structure wherein means for preventing the displacement control valve from popping out, that is, a falling-off preventing means for stopping a movement of the displacement control valve in a direction in which the displacement control valve comes out of its mounting position on the compressor, is intentionally provided to a portion which has not been intended at all in the conventional technology, positively speaking, to a portion which becomes an obstructive portion from the viewpoints of insertion and attachment of the displacement control valve into the compressor, detachment and maintenance thereof, etc. By the presence of this falling-off preventing means, even if the displacement control valve having fixed to the compressor becomes unfixed, a condition where the displacement control valve actually pops out of the compressor can be avoided, and occurrence of the unexpected state, where the displacement control valve pops out, can be surely prevented.

It is possible that the falling-off preventing means is constructed from an engine itself of a vehicle. Namely, as shown in the embodiment described later, by specifying the shape and directivity of the displacement control valve mounting portion on the compressor so that the engine body is positioned in a direction in which the displacement control valve comes out of the compressor, occurrence of a condition where the displacement control valve actually pops out of the compressor can be surely prevented. Since the engine has a sufficiently great mass and its outer shell is constructed as a structure which does not easily receive a damage, even in case where the displacement control valve mounted on the compressor becomes unfixed, the displacement control valve popping out of the compressor can be prevented from exerting unpreferred influences upon the environment.

Further, it is also possible that the falling-off preventing means is constructed from a bracket attached to an engine of a vehicle. By a strong bracket attached to an engine with a great mass, the displacement control valve popping out of the compressor by being completely fallen off from the compressor can be surely prevented from further popping out toward the surroundings, and therefore, the displacement control valve popping out of the compressor can be prevented from exerting unpreferred influences upon the environment.

Furthermore, it is also possible that the falling-off preventing means is constructed from a protecting member attached to the compressor. For example, as shown in the embodiment described later, a cover member or a cap-like member is attached as the protecting member at a portion positioned in a direction for the displacement control valve to come out of the mounting position thereof on the compressor, relative to the displacement control valve which is fixed at a predetermined portion of the compressor by a snap ring and the like similar to that in the conventional structure, and by the protecting member, popping out of the displacement control valve or a further popping out of the popped-out displacement control valve can be prevented, thereby surely avoiding the state where the displacement control valve popping out of the compressor exerts unpreferred influences upon the environment. Such a protecting member can also be given with a function for preventing slight refrigerant leakage and oil leakage from the displacement control valve portion or the displacement control valve mounting portion, by attaching a seal member such as an O-ring thereto.

It can also be structured wherein an elastic material (for example, a rubber member) capable of relieving an impact caused by a collision of the displacement control valve having come out of the compressor is provided between the above-described falling-off preventing means and the compressor. By providing such an elastic material for relieving an impact, it becomes possible to protect parts receiving an impact force ascribed to the displacement control valve popped out more adequately, and the displacement control valve popping out of the compressor can be prevented from exerting unpreferred influences upon the environment further surely.

Where, it is preferred that a fixing member for fixing the displacement control valve (a snap ring similar in the conventional structure, etc.) is provided at a predetermined mounting position of the displacement control valve on the compressor. This is because it is necessary to fix the displacement control valve at a predetermined position in a usual operational condition. Although an example using a snap ring as a fixing member for fixing the displacement control valve is shown in Fig. 4, even in a case where another fixing member is used or where another fixing structure is employed, the present invention can be applied. For example, the present invention can be applied also to a fixing structure wherein a flange portion is provided to the displacement control valve, and the flange portion is fixed by bolts to a predetermined mounting portion on the compressor, thereby making the snap ring and the fixing portion using it, shown in Fig. 4, unnecessary.

### Effect according to the Invention

Thus, in the vehicular refrigerating cycle according to the present invention, even for a refrigerating cycle using carbon dioxide refrigerant and having a compressor used at a high pressure, by providing the falling-off preventing means at a specified position, it becomes possible to surely prevent occurrence of a condition where the displacement control valve completely falls off from the compressor and pops out to a surrounding portion, and even if the displacement control valve mounted on the compressor becomes unfixed by any chance, the displacement control valve, which is about to pop out by a high pressure, can be prevented from actually popping out to the surroundings and from exerting influences upon the environment. Moreover, the structure according to the present invention can be carried out at an inexpensive cost, and an advantage with a desired safety condition can be easily obtained.

### Brief explanation of the drawings

[Fig. 1] Fig. 1 is a schematic equipment diagram, showing an example of a refrigerating cycle using Freon-group refrigerant.
[Fig. 2] Fig. 2 is a schematic equipment diagram, showing an example of a refrigerating cycle using carbon dioxide refrigerant.
[Fig. 3] Fig. 3 is a schematic diagram, showing an example of a mounting condition on a vehicle of the refrigerating cycle depicted in Fig. 2.
[Fig. 4] Fig. 4 is a vertical sectional view of a compressor showing an example mounted with a displacement control valve.
[Fig. 5] Fig. 5 shows a side view (A) and a rear view (B) of an external appearance of a compressor, showing an example of disposition of a displacement control valve mounting portion.
[Fig. 6] Fig. 6 is a schematic diagram showing an example for attaching the compressor depicted in Fig. 5 to an engine.
[Fig. 7] Fig. 7 is a schematic diagram showing a structure of a compressor attachment portion of a vehicular refrigerating cycle according to an embodiment of the present invention.
[Fig. 8] Fig. 8 is a schematic diagram showing a structure of a compressor attachment portion of a vehicular refrigerating cycle according to another embodiment of the present invention.
[Fig. 9] Fig. 9 is a schematic diagram showing a structure of a compressor portion of a vehicular refrigerating cycle according to a further embodiment of the present invention.
[Fig. 10] Fig. 10 is a sectional view of an example of a cap-like member as a protecting member in the present invention.

### Explanation of symbols

10: refrigerating cycle of carbon dioxide refrigerant
21: engine (including an engine as falling-off preventing means)
31, 51, 61, 71: compressor
32: displacement control valve
33: snap ring
37, 52, 64, 72: displacement control valve mounting portion
41, 62: compressor attachment portion to engine
63: bracket as falling-off preventing means
73: protecting member (cover member) as falling-off preventing means
75: seal member
81: protecting member (cap-like member) as falling-off preventing means

### The Best mode for carrying out the Invention

Hereinafter, desirable embodiments of the present invention will be explained referring to figures.

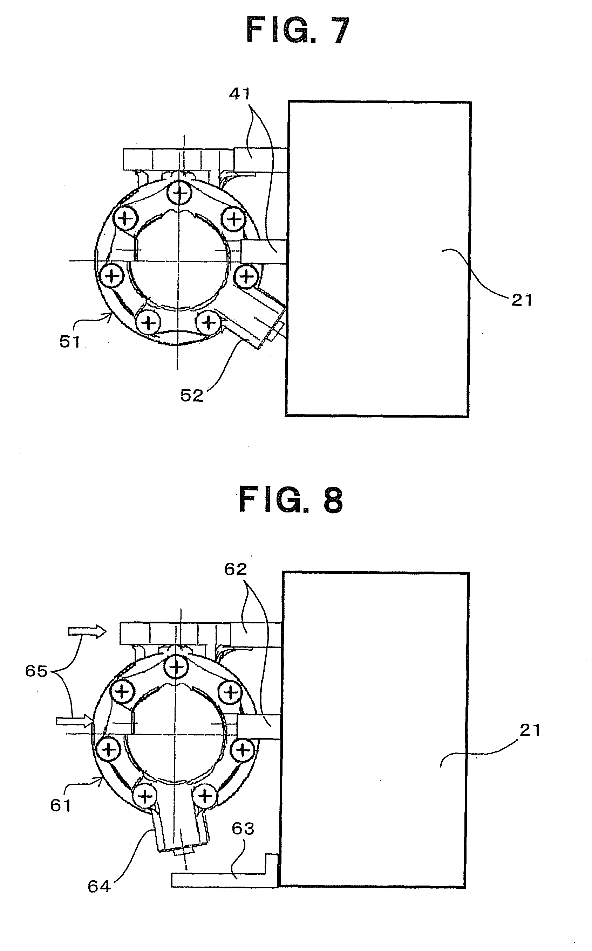

Fig. 7 depicts a structure of a compressor attachment portion of a vehicular refrigerating cycle according to an embodiment of the present invention. In Fig. 7, symbol 51 indicates a compressor, and this compressor 51 is fixed, for example, by bolt fastening, etc., to compressor attachment portions 41 of engine 21 similar to those shown in Fig. 6. In this embodiment, a displacement control valve mounting portion 52 of compressor 51 is directed toward engine 21 itself. Namely, the falling-off preventing means for the displacement control valve in the present invention is constructed from vehicle engine 21 itself. In other words, engine 21 itself is positioned as an obstructive body in a direction for the displacement control valve to come out. Since engine 21 has a sufficiently great mass as compared with the displacement control valve and its outer shell is constructed as a structure which does not easily receive a damage, even in case where the displacement control valve mounted on compressor 51 becomes unfixed by any chance, the displacement control valve popping out can be prevented from completely coming out of the compressor 51, and unpreferred influences exerted upon the environment can avoided. This structure can be achieved only by intentionally directing displacement control valve mounting portion 52 of compressor 51 toward engine 21, and cannot be achieved by the conventional structure as shown in Fig. 6.

Fig. 8 depicts a structure of a compressor attachment portion of a vehicular refrigerating cycle according to another embodiment of the present invention. In Fig. 8, symbol 61 indicates a compressor, and this compressor 61 is fixed to compressor attachment portions 61 of engine 21 in a manner similar to that shown in Fig. 6, by bolts, etc. in a direction shown by arrows 65. In this embodiment, the falling-off preventing means in the present invention is constructed from a bracket 63 attached to engine 21, and this bracket 63 is positioned as an obstructive body in a direction for the displacement control valve to come out of displacement control valve mounting portion 64 of compressor 61. Since this bracket 63 is attached to engine 21 with a great mass, by making bracket 63 itself as a structure with a high strength, it becomes possible to surely prevent the displacement control valve popping out from displacement control valve mounting portion 64 from moving further. Therefore, also by this structure, the displacement control valve popping out can be prevented from completely coming out of the compressor 61, and unpreferred influences exerted upon the environment can be avoided.

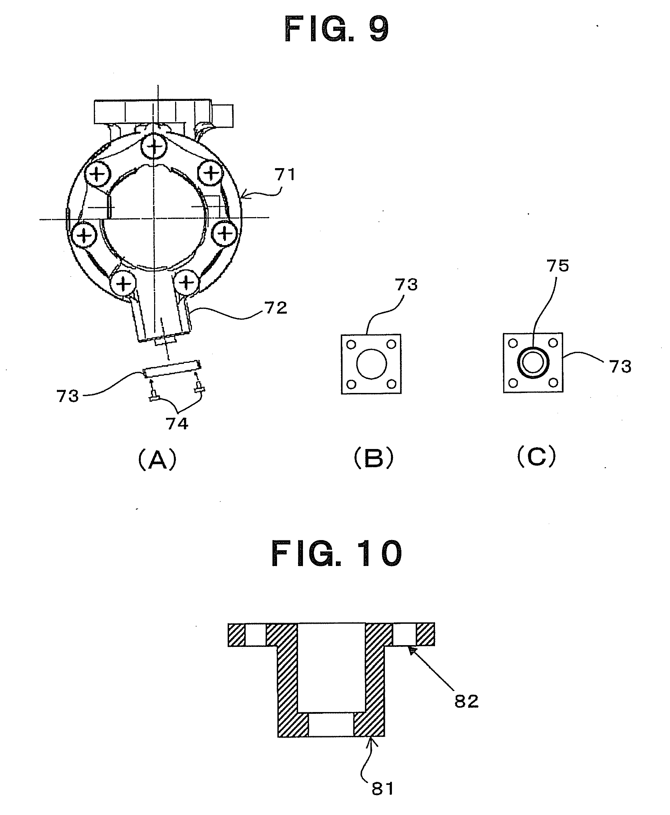

Fig. 9 (A) and (B) show a structure of a compressor portion of a vehicular refrigerating cycle according to a further embodiment of the present invention. In Fig. 9, symbol 71 indicates a compressor, and to a displacement control valve mounting portion 72 of this compressor 71, a cover member 73 as a protecting member for preventing the displacement control valve from coming out toward outside is attached and fixed by bolts 74, etc. By giving a sufficient strength to cover member 73 and its attachment structure, the displacement control valve is prevented from actually coming out toward outside, and the popping out of the displacement control valve, which becomes a problem, may be prevented at a relatively early stage. Further, in this case, as shown in Fig. 9 (C), it is possible to attach a seal member 75 such as an O-ring to cover member 73 provided as the protecting member. By providing such a seal member 75, it becomes possible to give a function for preventing a slight refrigerant leakage and oil leakage from the displacement control valve or the displacement control valve mounting portion.

Moreover, it is also possible to prevent the displacement control valve from actually coming out toward outside further surely by providing a cap-like member 81 as shown in Fig. 10 to the outlet portion of displacement control valve mounting portion 72, instead of cover member 73 shown in Fig. 9 or together with the cover member 73. Cap-like member 81 may be formed with bolt holes 82 and the like, and the member may be fixed to displacement control valve mounting portion 72 by bolts. Also in this case, it is possible to provide a seal member similar to that shown in Fig. 9 (C) to cap-like member 81 provided as a protecting member. Further, even if the displacement control valve itself is, for example, a flange-type one which can be fixed to a compressor body side by bolts and the like, it is possible to attach this cap-like member 81 as a protecting member to the outside of the displacement control valve, and also in such a case, the displacement control valve can be surely prevented from actually coming out toward outside.

Furthermore, although a figure is omitted, an elastic material such as a rubber member capable of relieving an impact caused by a collision of the displacement control valve having come out of the compressor may be provided between each of the above-described various falling-off preventing means and the compressor. By providing such an elastic material, an impact caused by the displacement control valve having popped out can be relieved, and it becomes possible to protect parts present on the side receiving the impact force more adequately.

Where, fixing of the displacement control valve itself to a predetermined mounting position of the compressor may be carried out by a fixing member similar to that shown in Fig. 4, for example, by a snap ring. Further, as aforementioned, a structure may be employed wherein a flange portion is provided to the displacement control valve and the flange portion is fixed to the compressor at a predetermined attachment portion by bolts.

### Industrial Applications of the Invention

The structure according to the present invention is suitable particularly to a refrigerating cycle with a high-pressure specification which uses carbon dioxide refrigerant, and it can be applied to any vehicular refrigerating cycle.

## Claims

1. A vehicular refrigerating cycle having a compressor, which uses carbon dioxide refrigerant and which has a displacement control valve capable of controlling a displacement in response to an external signal, comprising:
a falling-off preventing means for stopping a movement of said displacement control valve in a direction in which said displacement control valve comes out of its mounting position on said compressor, said falling-off preventing means being disposed at a portion which is positioned in said direction for said displacement control valve to come out of its mounting position on said compressor and positioned on this side of a position for said displacement control valve to completely fall off from said compressor.

2. The vehicular refrigerating cycle according to claim 1, wherein said falling-off preventing means is constructed from an engine of a vehicle.

3. The vehicular refrigerating cycle according to claim 1, wherein said falling-off preventing means is constructed from a bracket attached to an engine of a vehicle.

4. The vehicular refrigerating cycle according to claim 1, wherein said falling-off preventing means is constructed from a protecting member attached to said compressor.

5. The vehicular refrigerating cycle according to claim 4, wherein a seal member is provided to said protecting member.

6. The vehicular refrigerating cycle according to claim 1, wherein an elastic material capable of relieving an impact caused by a collision of said displacement control valve having come out of said compressor is provided between said falling-off preventing means and said compressor.

7. The vehicular refrigerating cycle according to claim 1, wherein a fixing member for fixing said displacement control valve is provided at said mounting position of said displacement control valve on said compressor.
